# EUROPÄISCHE PATENTSCHRIFT

(11) **EP 4 251 880 B1**
(45) Veröffentlichungstag und Bekanntmachung des Hinweises auf die Patenterteilung: **04.09.2024**
(21) Anmeldenummer: 21844237.4
(22) Anmeldetag: 21.12.2021
(51) Int. Cl.: F04B 17/04, F01N 3/20, F16K 15/02, F16K 15/08

(54) **PUMPENVORRICHTUNG**
PUMPING DEVICE
DISPOSITIF DE POMPAGE

(30) Priorität: 22.01.2021 DE 102021000327
(43) Veröffentlichungstag der Anmeldung: 04.10.2023
(73) Patentinhaber: Hydac Fluidtechnik GmbH, 66280 Sulzbach/Saar (DE)
(72) Erfinder: GROH, Christian, 66453 Gersheim (DE)
(74) Vertreter: Bartels und Partner, Patentanwälte
(86) Internationale Anmeldenummer: PCT/EP2021/086930
(87) Internationale Veröffentlichungsnummer: WO 2022/156979

(56) Entgegenhaltungen:
- DE-A1- 102012 010 980
- DE-A1- 102018 125 058
- DE-A1- 3 504 789
- US-A1- 2019 112 959

## Beschreibung

Die Erfindung betrifft eine Pumpenvorrichtung mit einem in einem Pumpengehäuse längsverfahrbar angeordneten Pumpenkolben, der von einer Betätigungsmagneteinrichtung angesteuert auf ein Einlassventil und ein Auslassventil einwirkt, wobei das Einlassventil beim Ansaughub des Pumpenkolbens öffnet und das Auslassventil bei dessen Förderhub.

Durch DE 10 2018 001 523 A1 ist eine Einrichtung zur Bereitstellung von unter einem vorgebbaren Druck stehenden Fluiden für die Druckversorgung eines Abnehmers, wie einer Arbeitseinheit eines SCR (Selective Catalytic Reduktion)-Systems zur Abgasbehandlung von Verbrennungsmotoren bekannt, mit mindestens einer Pumpenvorrichtung, die in einem zwischen einem Fluidvorrat und einem Abnehmer gebildeten Fluidkreislauf das betreffende Fluid aus dem Fluidvorrat entnimmt und dem Abnehmer zuführt. Die bekannte Pumpenvorrichtung benötigt zu ihrem Betrieb eine konventionelle Druckversorgung in Form einer antreibbaren Hydropumpe. Der Vorteil der bekannten Pumpenvorrichtung besteht darin, dass sich bei Stillstandsperioden unter Frostbedingungen kein oder wenig gefrierbares Fluid, regelmäßig in Form einer wässrigen Harnstofflösung (Adblue), in der Pumpe befindet, die gefrieren könnte und insoweit Teile der Pumpenvorrichtung bis zum Unbrauchbarwerden schädigen könnte. Eine vergleichbare Vorrichtung zum Bereitstellen eines unter einem vorgebbaren Druck stehenden Fluids ist durch DE 10 2019 000 488 A1 aufgezeigt, wobei die dahingehende Pumpenfördervorrichtung wiederum mittels einer antreibbaren Hydropumpe für ihren Betrieb zu versorgen ist.

Durch DE 10 2012 010 980 A1 ist ein System zur Abgasnachbehandlung bei einem Verbrennungsmotor bekannt, aufweisend eine gattungsgemäße Pumpenvorrichtung, die für eine dosierte Zufuhr einer gefrierbaren Substanz, insbesondere in Form einer wässrigen Harnstofflösung, elektromechanisch von einer Betätigungsmagneteinrichtung ansteuerbar ist. Als Schutz gegen eine Schädigung des Systems durch Volumenausdehnung bei Gefrieren der Substanz dient eine Ausgleichseinrichtung, die auf einen Fluid- oder Pumpenraum derart einwirkt, dass eine mit einer Zunahme des Fluiddrucks bei Gefrieren einhergehende Volumenausdehnung der Substanz innerhalb dieses Fluid- oder Pumpenraumes kompensiert ist.

Obwohl alle vorstehend bekannten Systeme mit entsprechend konzipierter Pumpenvorrichtung, bevorzugt im Rahmen von wässrigen Harnstofflösungen (Adblue), eingesetzt werden, sind diese dem Grunde nach aber auch geeignet alle möglichen Arten von Fluidmedien zu transportieren respektive zu fördern, einschließlich in Form von Hydraulikölen sowie speziell konzipierten Getriebeölen. Charakteristisch ist jedoch, dass bei sehr hohen Taktzahlen die bekannten Systeme mit ihrer jeweiligen Pumpenvorrichtung immer nur geringe Fluidmengen transportieren können.

Ausgehend von diesem Stand der Technik liegt der Erfindung die Aufgabe zugrunde, unter Beibehalten der Vorteile der bekannten Systeme nebst Pumpenvorrichtungen, diesen eine weitere Alternative zur Seite zu stellen, die sich durch ein hohes Maß an Funktionssicherheit auszeichnet und die sich bauraumsparend sowie kostengünstig realisieren lässt.

Eine dahingehende Aufgabe löst eine Pumpenvorrichtung mit den Merkmalen des Patentanspruches 1 in seiner Gesamtheit.
Dadurch, dass gemäß dem kennzeichnenden Teil des Patentanspruches 1 das Einlassventil einen ringförmigen Ventilkolben aufweist, der das Pumpengehäuse umfasst, das eine Ein- und eine Austrittstelle für Fluid aufweist, dass der Ventilkolben eine Druckmeldefläche aufweist, die vom Pumpenkolben derart angesteuert ist, dass beim Ansaughub die Druckmeldefläche des Ventilkolbens entgegen der Wirkung eines Energiespeichers in Verfahrrichtung des Pumpenkolbens mit bewegt ist und dabei einen Fluidweg in einen Pumpenraum des Pumpengehäuses mit dem Pumpenkolben frei gibt, und dass beim Förderhub der Ventilkolben des Einlassventiles unter der Wirkung des Energiespeichers und der Druckmeldefläche diesen Fluidweg sperrt und das Auslassventil aufsteuert, ist der mittels der Betätigungsmagneteinrichtung ansteuerbare Pumpenkolben derart mit dem Ventilkolben nebst seiner Druckmeldefläche gekoppelt, dass bei einer Pumpbewegung mittels des Pumpenkolbens der Ventilkolben zwangsgesteuert nachgeführt ist und den Einlassvorgang des insoweit gebildeten Einlassventiles automatisch ansteuert.

Die dahingehende Kopplung ist ausschließlich druckgesteuert. So kommt es beim Ansaughub des Pumpenkolbens, in Richtung der Betätigungsmagneteinrichtung und weg vom Auslassventil, zu einer Vergrößerung des Aufnahmevolumens im Pumpenraum, mit der Folge, dass durch die hierdurch entstehende Sogwirkung die Druckmeldefläche mit unter den Einfluss dieser Sogwirkung gerät und entgegen der Wirkung des Energiespeichers, regelmäßig in Form einer Druckfeder, dem Rückwärtshub des Pumpenkolbens synchron nachfolgt; gleichfalls in Richtung der Betätigungsmagneteinrichtung und vom Auslassventil weggerichtet. Bei der dahingehenden Ansaughubbewegung des Pumpenkolbens wird durch das zeitgleiche Mitbewegen des Ventilkolbens der Fluidweg zwischen dem Pumpenraum und einer Fluidzufuhr freigegeben, sodass sich der Pumpenraum mit Fluid aus der Fluidzufuhr vollständig füllen kann. Bei der anschließenden Umsteuerbewegung des Pumpenkolbens mittels der Betätigungsmagneteinrichtung wird Fluid aus dem Pumpenraum in Richtung der Druckmeldefläche unter Fluiddruck aufgebracht, was den angesprochenen Fluidweg zur Fluidzufuhr sperrt und gleichzeitig wird über das aus dem Pumpenraum verdrängte Fluid das Auslassventil aufgesteuert und es erfolgt unter Druck eine Fluidabfuhr aus dem Pumpenraum in Richtung der Austrittsstelle für Fluid und über das insoweit geöffnete Auslassventil, bei geschlossenem Einlassventil, in Richtung eines fluidischen Verbrauchers, der mit Fluid vorgebbaren Druckes zu versorgen ist, was auch ein System zur Abgasnachbehandlung sein kann. Nach Durchlaufen des Förderhubes steuert der Pumpenkolben unter dem Einfluss der Betätigungsmagneteinrichtung wieder um und ein erneuter Ansaughub geht vonstatten.

Bei einer bevorzugten Ausführungsform der erfindungsgemäßen Pumpenvorrichtung ist vorgesehen, dass der Ventilkolben des Einlassventiles entlang einer Führungsfläche auf der Außenumfangsfläche des Pumpengehäuses geführt ist und dass der Ventilkolben auf seiner dem Pumpengehäuse zugewandten Innenseite einen Vorsprung aufweist, der die Druckmeldefläche bildet, die sich quer zu der Längsachse des Pumpenkolbens erstreckt. Dank der angesprochenen Führung des Ventilkolbens auf dem Pumpengehäuse sind Hemmnisse im Betrieb vermieden und damit ein funktionssicherer Gebrauch ermöglicht. Aufgrund der Anordnung der Druckmeldefläche quer zur Längsachse des Pumpenkolbens ist eine sichere, kavitationsarme Anströmung erreicht.

In vorteilhafterweise ist dabei ferner vorgesehen, dass der Vorsprung des Ventilkolbens entlang eines korrespondierenden Rücksprungs im Pumpengehäuse geführt ist und dass im unbetätigten Zustand des Ventilkolbens der Fluidweg zwischen dem Pumpenraum und einer Fluidzufuhr gesperrt ist. Dergestalt ist eine sichere Ansteuerung des Fluidweges zwecks Freigeben oder Sperren einer Fluidzufuhr erreicht.

Bei einer weiteren vorteilhaften Ausführungsform der erfindungsgemäßen Pumpenvorrichtung ist vorgesehen, dass der Vorsprung des Ventilkolbens mit seiner axialen Baulänge im unbetätigten Zustand einen Durchlass, vorzugsweise in Form einer Bohrungsreihe, im Pumpengehäuse als Eintrittsstelle und Teil des Fluidweges zumindest teilweise überdeckt und im betätigten Zustand diesen Durchlass überfährt und den Fluidweg zu der Fluidzufuhr freigibt. Dergestalt lässt sich bauraumsparend die Ansteuerung des Fluidweges erreichen. Durch die synchrone Bewegung von Ventilkolben und Pumpenkolben sind rasche Auf- und Zusteuerbewegungen für die Fluidzu- und -abfuhr erreicht.

Bei einer weiteren vorteilhaften Ausführungsform der erfindungsgemäßen Pumpenvorrichtung ist vorgesehen, dass der Ventilkolben an seiner freien Stirnseite, die dem Auslassventil zugewandt ist, eine Ringausnehmung aufweist, die in jeder Verfahrstellung des Ventilkolbens permanent fluidführend mit der Fluidzufuhr verbunden ist. Aufgrund dieser permanenten Fluidführung ist eine unmittelbare Freigabe für den Fluidweg mittels des Ventilkolbens des Einlassventils erreicht.

Bei einer weiteren bevorzugten Ausführungsform der erfindungsgemäßen Pumpenvorrichtung ist weiter vorgesehen, dass der Ventilkolben eine weitere Ringausnehmung aufweist, in die in jeder Verfahrstellung des Ventilkolbens der Durchlass im Pumpengehäuse ausmündet und dass die beiden Ringkammern des Ventilkolbens durch den innenliegenden Vorsprung mit der Druckmeldefläche räumlich voneinander getrennt sind. Die vom Fluiddruck jeweils ansteuerbaren Ringkammern sind platzsparend im Ventilkolben untergebracht und erlauben eine jeweils druckausgeglichene Ansteuerung des Ventilkolbens in rascher zeitlicher Abfolge, was der Funktionssicherheit zugutekommt. Hierzu trägt auch mit bei, dass der Ventilkolben an seiner Außenumfangsfläche eine Angriffsfläche für den Energiespeicher in Form einer Druckfeder aufweist, die sich mit ihrem anderen freien Ende am Pumpengehäuse abstützt. In Zusammenwirken mit der Betätigungsmagneteinrichtung lässt sich dergestalt in rascher Abfolge, je nach Verfahrbewegung des Pumpenkolbens, der Ventilkolben mit ansteuern, wobei alle Betätigungskräfte für die bewegbaren Komponenten parallel zueinander verlaufend angeordnet sind, was zu Energieersparnissen im Betrieb führt.

Bei einer weiteren bevorzugten Ausführungsform der erfindungsgemäßen Pumpenvorrichtung ist vorgesehen, dass der Pumpenkolben im unbetätigten Zustand mittels eines weiteren Energiespeichers, vorzugsweise in Form einer weiteren Druckfeder, in einer rückwärtigen Ausgangsstellung ist, bei der der Pumpenraum sein größtes Pumpenvolumen einnimmt und dass im betätigten Zustand der Pumpenkolben im Rahmen des Förderhubes in einer vorwärtigen Bewegung dieses Pumpenvolumen über die Austrittstelle und das Auslassventil ausbringt. Dergestalt ist ein quasi-kontinuierlicher Ein- und Austrag von Fluidmengen in bzw. aus dem Pumpenraum mit dem Pumpenkolben möglich. Für das Erreichen eines kurzen Fluidweges ist es dabei vorteilhaft, dass diese Fluidmengen in Richtung des Auslassventiles quer zum Fluidweg über den Durchlass im Pumpengehäuse verlaufen. Auch insoweit ist ein kavitationsarmer Betrieb mit der Pumpenvorrichtung ermöglicht.

Für einen hemmnisfreien Betrieb hat es sich ferner als vorteilhaft erwiesen, dass die Betätigungsmagneteinrichtung einen über eine bestrombare Spule betätigbaren Magnetanker aufweist, der über ein separates Stangenteil auf den Pumpenkolben einwirkt. Es besteht aber auch die Möglichkeit den Pumpenkolben entsprechend zu verlängern oder als einstückige Baukomponente mit dem Stangenteil zu versehen, um dergestalt eine rasche Abfolge von Pumpenkolbenbewegungen im Zusammenwirken mit dem weiteren Energiespeicher zu erreichen.

Im Folgenden wird die erfindungsgemäße Pumpenvorrichtung anhand eines Ausführungsbeispieles nach der Zeichnung näher erläutert. Dabei zeigen in prinzipieller und nicht maßstäblicher Darstellung die
- Figur 1: einen Längsschnitt durch die Pumpenvorrichtung als Ganzes; und
- Figur 2: einen vergrößerten Ausschnitt der Pumpenvorrichtung nach der Figur 1 mit dem Einlassventil und Komponenten des Auslassventiles.

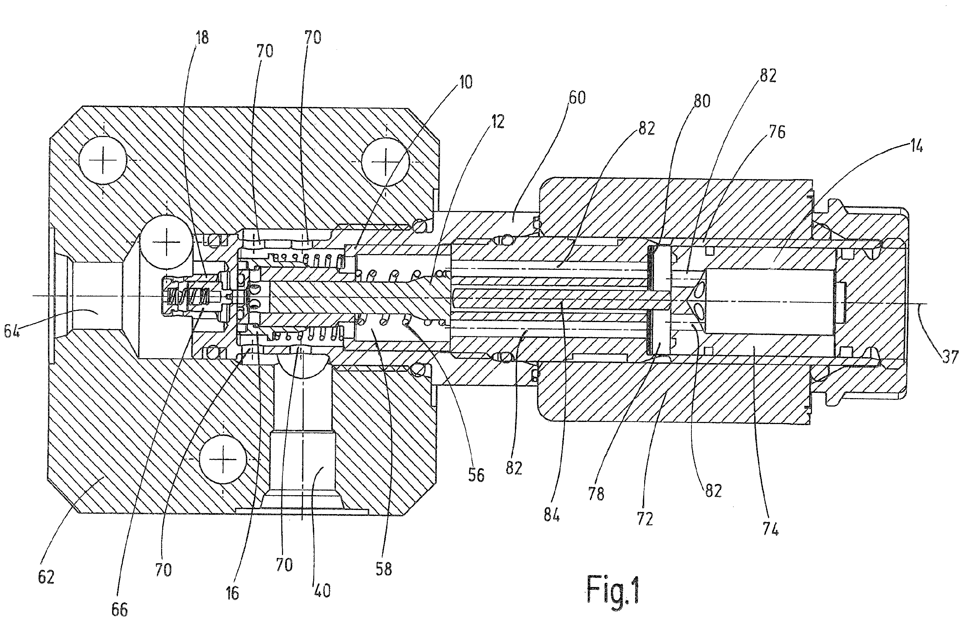

Die in Figur 1 als Ganzes im Längsschnitt dargestellte Pumpenvorrichtung weist ein Pumpengehäuse 10 auf mit einem darin längsverfahrbar angeordneten Pumpenkolben 12. Der Pumpenkolben 12 ist von einer Betätigungsmagneteinrichtung 14 angesteuert und wirkt insoweit auf ein Einlassventil 16 und ein Auslassventil 18 ein. Das Einlassventil 16 öffnet beim Ansaughub des Pumpenkolbens 12, bei dem sich dieser in Blickrichtung auf die Figur 1 gesehen von einer linken in eine rechte in der Figur 1 gezeigte Anschlagsstellung bewegt. Bewegt sich der Pumpenkolben 12 von seiner in der Figur 1 gezeigten rechten Anschlagstellung im Förderhub ganz nach links, öffnet das Auslassventil 18.

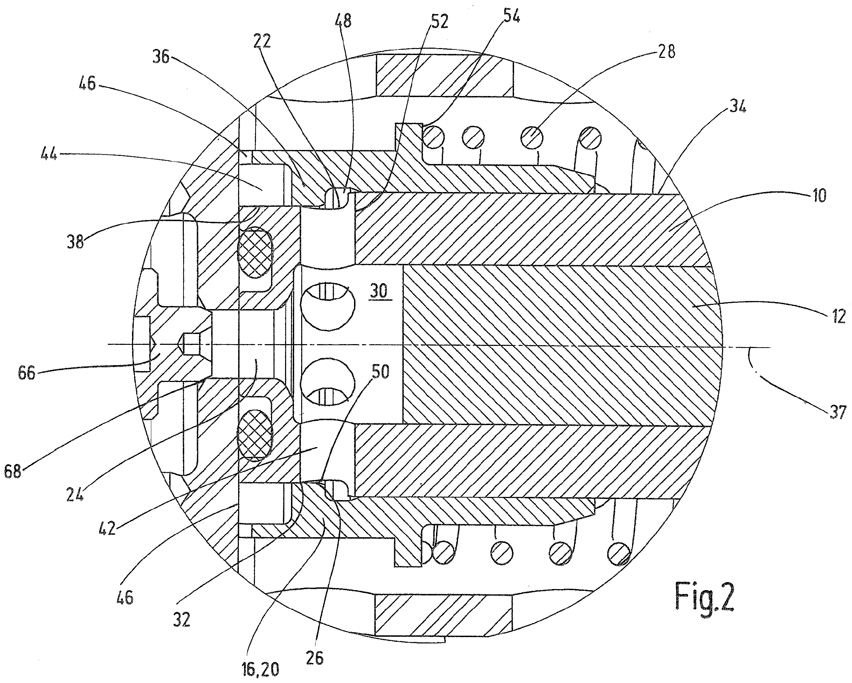

Wie insbesondere die Figur 2 zeigt, weist das Einlassventil 16 einen ringförmigen Ventilkolben 20 auf, der das Pumpengehäuse 10 umfasst. Das Pumpengehäuse 10 weist ferner eine Eintrittsstelle 22 für den Eintritt von Fluid auf, sowie eine Austrittstelle 24 für das Ausbringen der Fluidmenge, die mittels des Pumpenkolbens 12 in Richtung der Austrittsstelle 24 gefördert wird. Wie weiter die Figur 2 zeigt, weist der Ventilkolben 20 eine ringförmige Druckmeldefläche 26 auf, die vom Pumpenkolben 12 derart angesteuert ist, dass beim Ansaughub des Pumpenkolbens 12, also bei seiner Bewegung von links nach rechts in Blickrichtung auf die Figur 1 gesehen, die Druckmeldefläche 26 und mithin der Ventilkolben 20 selbst, entgegen der Wirkung eines Energiespeichers in Form der Druckfeder 28, nach rechts mitbewegt ist. Durch den angesprochenen Ansaughub mittels des Pumpenkolbens 12 entsteht in einem Pumpenraum 30, der von Pumpenkolben 12 und von der zylindrischen Innenwand des Pumpengehäuses 10 begrenzt ist, ein Unterdruck der den Ventilkolben 20 entsprechend mitnimmt. Bei der dahingehenden Verfahrbewegung des Ventilkolbens 20, in synchroner Bewegung mit dem Pumpenkolben 12, wird von Seiten des Ventilkolbens 20 die Eintrittsstelle 22 freigegeben und dabei ein Fluidweg von der Außenumfangsseite des Pumpengehäuses 10 in den Pumpenraum 30. Dabei verfährt der Ventilkolben 20, was in den Figuren 1 und 2 nicht dargestellt ist, unter der Unterdruckwirkung an der Druckmeldefläche 26 so weit nach rechts, bis die ringförmiger Ventilkante 32 am Pumpengehäuse 10 vollständig überfahren ist und dabei einen sich zusehens vergrößernden Spalt als Teil des Fluidweges zwischen Ventilkolben 20 und Pumpengehäuse 10 in diesem Bereich freigibt.

Bei einem sich anschließenden Förderhub, bei dem der Ventilkolben 12 in Richtung der Austrittstelle 24 verfährt, verringert sich das Volumen im Pumpenraum 30 und das Einlassventil 16 wird für einen Fluidaustrag aufgesteuert. Dabei kommt es auch zu einem Druckanstieg an der Druckmeldefläche 26 und der Energiespeicher respektive die Druckfeder 28 drückt in dahingehender Wirkverbindung mit der Druckmeldefläche 26 den Ventilkolben 20 zurück in seine in den Figuren dargestellte linke Anschlagstellung.

Der Ventilkolben 20 des Einlassventiles 16 ist auf der Außenumfangsfläche des Pumpengehäuses 10 entlang einer Führungsfläche 34 geführt, wobei der Ventilkolben 20 auf seiner dem Pumpengehäuse 10 zugewandten Innenseite einen radialen Vorsprung 36 aufweist, der insoweit die Druckmeldefläche 26 bildet, die sich insoweit im Wesentlichen quer zur Längsachse 37 des Pumpenkolbens 12 erstreckt.

Wie insbesondere die Figur 2 des Weiteren zeigt, ist der genannte Vorsprung 36 des Ventilkolbens 20 entlang eines korrespondierenden Rücksprungs 38 im Pumpengehäuse 10 geführt, wobei der Außendurchmesser des zylindrischen Rücksprungs 38 demgemäß kleiner ausfällt als der Außendurchmesser des Pumpengehäuses 10, der die Führungsfläche 34 bildet. Die Durchmesserdifferenz zwischen Führungsfläche 34 und Rücksprung 38 des Pumpengehäuses 10 entspricht dabei der Durchmesserdifferenz am Vorsprung 36 zwischen der Innenumfangsfläche des Ventilkolbens 20 im Bereich der Führungsfläche 34 und seinem Innendurchmesser im Bereich der Anlage mit der Ventilkante 32 im Bereich des Rücksprungs 38.

Im unbetätigten Zustand des Ventilkolbens 20 gemäß der Darstellung nach den Figuren 1 und 2, ist der angesprochene Fluidweg wie dargestellt zwischen dem Pumpenraum 30 und einer Fluidzufuhr 40 (Fig. 1) gesperrt, über die die Pumpenvorrichtung Fluid beispielsweise aus einem angeschlossenen nicht näher dargestellten hydraulischen Kreislauf ansaugt. Im Pumpengehäuse 10 ist als Teil des angesprochenen Fluidweges ein Durchlass 42, vorzugsweise in Form einer Bohrungsreihe, vorhanden, die als mögliche Eintrittsstelle 22 für das Fluid dient. Im gesperrten Zustand des Fluidweges ist die dahingehende Bohrungsreihe als Durchlass 42 in etwa hälftig von dem ringförmigen Vorsprung 36 des Ventilkolbens 20 überdeckt. Ferner weist der Ventilkolben 20 an seiner freien Stirnseite, die dem Auslassventil 18 zugewandt ist, eine Ringausnehmung 44 auf, die in jeder Verfahrstellung des Ventilkolbens 20 permanent fluidführend mit der Fluidzufuhr 40 verbunden ist. Hierfür weist der Ventilkolben 20 im Bereich seiner Außenumfangswand und diese durchgreifend einzelne Durchtrittsstellen 46 auf, die die dahingehende permanente Fluidverbindung herstellen.

Des Weiteren weist der Ventilkolben 20 eine weitere Ringausnehmung 48 auf, die in vorderen Verfahrstellungen des Ventilkolbens 20 in den Durchlass 42 im Pumpengehäuse 10 ausmündet, wobei die beiden Ringkammern gebildet durch die Ringausnehmungen 44, 48 des Ventilkolbens 20 durch den innenliegenden Vorsprung 36 mit der Druckmeldefläche 26 räumlich voneinander getrennt sind. Für den Erhalt einer verbesserten Ansteuerung für die Druckmeldefläche 26 ist vorgesehen, dass auf der Außenumfangsseite des Vorsprunges 36, die der Ventilkante 32 zugewandt ist, eine konische Steuerfläche 50 vorhanden ist, die sich in Richtung der ringförmigen Ventilkante 32 im Durchmesser verjüngt. Bewegt sich der Ventilkolben 20 in Blickrichtung auf die Figur 2 gesehen nach rechts, kann dabei die Druckmeldefläche 26 in Anschlag mit einer Stirnseite 52 des Pumpengehäuses 10 kommen, welche die Bohrungsreihe als Durchlassstelle 42 begrenzt. Dabei wird die Druckfeder 28 maximal vorgespannt, die sich mit ihrem einem freien Ende an einer Angriffsfläche 54 abstützt, die durch einen radialen Überstand am Ventilkolben 20 ausgebildet ist. Das andere Ende der Druckfeder 28 stützt sich dabei an radial vorstehenden Teilen des Pumpengehäuses 10 selbst ab.

Wie des Weiteren die Figur 1 zeigt, ist im unbetätigten Zustand der Betätigungsmagneteinrichtung 14 der Pumpenkolben 12 mittels eines weiteren Energiespeichers, vorzugsweise einer weiteren Druckfeder 56, in einer rückwärtigen Ausgangsstellung gehalten, bei der der Pumpenraum 30 sein größtmögliches Pumpenvolumen einnimmt. Dabei stützt sich die Druckfeder 56 mit ihrem einen freien Ende an Teilen des Pumpengehäuses 10 ab und mit ihrem anderen freien Ende an einem absatzartigen Vorsprung am rückwärtigen Ende des Pumpenkolbens 12. Insoweit ist in diesem Bereich der Pumpenkolben 12 zusammen mit der Druckfeder 56 in einem Gehäuseraum 58 aufgenommen, der von nach außen vorspringenden Wandteilen des Pumpengehäuses 10 gebildet ist. Das sich insoweit nach außen hin verbreiternde Pumpengehäuse 10 ist in einem nach innen hin, sich stufenweise verjüngenden Gehäuseteil 60 aufgenommen, das in ein flanschartiges Gehäuse 62 in abgedichteterweise eingeschraubt ist, wobei das Gehäuse 62 von der Fluidzufuhr 40 radial durchgriffen ist und koaxial zur Längsachse 37 von Pumpenvorrichtung nebst Pumpenkolben 12 die Fluidabfuhr 64 aufweist. Wie die Fluidzufuhr 40 ist auch die Fluidabfuhr 64 Bestandteil eines nicht näher dargestellten hydraulischen Kreislaufes, über das die Pumpenvorrichtung über die Fluidzufuhr 40 zugeführtes Fluid an die Fluidabfuhr 64 pumpend weitergibt. Hydraulischer Kreislauf ist hier weit zu verstehen und schließt den Transport von jedwedem fließfähigen Medium mit ein, einschließlich in Form von wässrigen Harnstofflösungen (Adblue).

Das Auslassventil 18 weist einen federbelasteten Schließkolben 66 auf, der entgegen der Wirkung einer Druckfeder durch den anwachsenden Druck im Pumpenraum 30 aufgesteuert wird, sofern der Ventilkolben 12 in eine seiner vorderen Pumpstellungen gelangt und dabei Fluid aus dem Pumpenraum 30 und die Austrittsstelle 24 bei geöffnetem Auslassventil 18 in Richtung der Fluidabfuhr 64 austrägt. Um eine gute Abdichtwirkung zu erzielen, ist der Schließkolben 66 gemäß der Darstellung nach der Figur 2 in Anlage mit einem Ventilsitz 68, gebildet durch Wandteile des eingeschraubten Gehäuseteiles 60, im Bereich der Fluidabfuhr 64. Der dahingehende Ventilsitz 68 ist aus einer Schräge gebildet, die auf einer Seite in die kreiszylindrische Austrittsstelle 24 ausmündet, die gemeinsam gebildet ist aus Teilen des Pumpengehäuses 10 und des Gehäuseteiles 60 in diesem Bereich. Des Weiteren mündet der Ventilsitz 68 in Richtung der ringförmigen Fluidabfuhr 64 im Gehäuseteil 60 aus. Im Bereich des Ventilkolbens 20 ist dieser in einer diesbezüglichen Aufnahme im Gehäuseteil 60 aufgenommen, das mehrere Fluiddurchgangsbohrungen 70 aufweist, die den Zutritt von Fluid über die Fluidzufuhr 40 sowie die Durchtrittsstellen 46 in die Ringausnehmung 44 des Ventilkolbens 20 sicherstellen. Insoweit verläuft der Fluidweg in Richtung des Auslassventiles 18 quer zu Anteilen des Fluidweges über den Durchlass 42 im Pumpengehäuse 10.

Die Betätigungsmagneteinrichtung 14 weist in üblicher Bauweise einen über eine bestrombare Spule 72 betätigbaren Magnetanker 74 auf, der in einem Polrohr 76 längsverfahrbar geführt ist und zwar in einem diesbezüglichen Ankerraum 78, der auf seiner einen freien Stirnseite in Richtung des Pumpenkolbens 12 eine Antiklebscheibe 80 aufweist. Das Polrohr 76 ist mit zugehörigen Wandteilen in das Gehäuseteil 60 eingeschraubt und entsprechende Längskanäle 82 sorgen für einen druckausgeglichenen Betrieb für den Magnetanker 74 von seiner in Figur 1 gezeigten rechten Anschlagstellung in seine demgegenüber in Richtung der Antiklebscheibe 80 vorderen Betätigungsstellung und umgekehrt. Hierbei nimmt der Magnetanker 74 ein Stangenteil 84 mit, dass vom Magnetanker 74 angesteuert, entsprechend für einen Förderhub, den Pumpenkolben 12 mitnimmt. Bei unbestromter Betätigungsmagneteinrichtung 14 verfährt der Pumpenkolben 12 unter der Wirkung der Druckfeder 56 in seine maximale Ansaughubstellung, wobei die Stange 84 rückgestellt wird und dabei den Magnetanker 74 in seine in der Figur 1 gezeigte Ausgangsstellung mitnimmt. Die Betätigung für den Pumpenkolben 12 kann in zeitlich dichter Abfolge über die Ansteuerung des Betätigungsmagneten der Magneteinrichtung 14 erfolgen, sodass ein quasi-kontinuierlicher Pumpenbetrieb an der Stelle der Fluidabfuhr 64 gewährleistet ist, wobei im Hinblick auf das geringe Volumen des Pumpenraums 30 immer nur ein geringer Mengenaustrag erfolgt. Insbesondere für Notbetätigungen kann jedoch die dahingehende Volumenmenge ausreichen, um Verbraucher innerhalb des hydraulischen Kreises funktionssicher betätigen zu können.

## Patentansprüche

1. Pumpenvorrichtung mit einem in einem Pumpengehäuse (10) längsverfahrbar angeordneten Pumpenkolben (12), der von einer Betätigungsmagneteinrichtung (14) angesteuert auf ein Einlassventil (16) und ein Auslassventil (18) einwirkt, wobei das Einlassventil (16) beim Ansaughub des Pumpenkolbens (12) öffnet und das Auslassventil (18) bei dessen Förderhub, **dadurch gekennzeichnet, dass** das Einlassventil (16) einen ringförmigen Ventilkolben (20) aufweist, der das Pumpengehäuse (10) umfasst, das eine Ein (22)-und eine Austrittstelle (24) für Fluid aufweist, dass der Ventilkolben (20) eine Druckmeldefläche (26) aufweist, die vom Pumpenkolben (12) derart angesteuert ist, dass beim Ansaughub die Druckmeldefläche (26) des Ventilkolbens (20) entgegen der Wirkung eines Energiespeichers (28) in Verfahrrichtung des Pumpenkolbens (12) mit bewegt ist und dabei einen Fluidweg in einen Pumpenraum (30) des Pumpengehäuses (10) mit dem Pumpenkolben (12) frei gibt, und dass beim Förderhub der Ventilkolben (20) des Einlassventiles (16) unter der Wirkung des Energiespeichers (28) und der Druckmeldefläche (26) diesen Fluidweg sperrt und das Auslassventil (18) aufsteuert.

2. Pumpenvorrichtung nach Anspruch 1, **dadurch gekennzeichnet, dass** der Ventilkolben (20) des Einlassventiles (16) entlang einer Führungsfläche (34) auf der Außenumfangsfläche des Pumpengehäuses (10) geführt ist und dass der Ventilkolben (20) auf seiner dem Pumpengehäuse (10) zugewandten Innenseite einen Vorsprung (36) aufweist, der die Druckmeldefläche (26) bildet, die sich quer zu der Längsachse (37) des Pumpenkolbens (12) erstreckt.

3. Pumpenvorrichtung nach Anspruch 1 oder 2, **dadurch gekennzeichnet, dass** der Vorsprung (36) des Ventilkolbens (20) entlang eines korrespondierenden Rücksprungs (38) im Pumpengehäuse (10) geführt ist und dass im unbetätigten Zustand des Ventilkolbens (20) der Fluidweg zwischen dem Pumpenraum (20) und einer Fluidzufuhr (40) gesperrt ist.

4. Pumpenvorrichtung nach einem der vorstehenden Ansprüche, **dadurch gekennzeichnet, dass** der Vorsprung (36) des Ventilkolbens (20) mit seiner axialen Baulänge im unbetätigten Zustand einen Durchlass (42), vorzugsweise in Form einer Bohrungsreihe, im Pumpengehäuse (10) als Eintrittsstelle (22) und Teil des Fluidweges zumindest teilweise überdeckt und im betätigten Zustand diesen Durchlass (42) zumindest teilweise überfährt und den Fluidweg zu der Fluidzufuhr (40) freigibt.

5. Pumpenvorrichtung nach einem der vorstehenden Ansprüche, **dadurch gekennzeichnet, dass** der Ventilkolben (20) an seiner freien Stirnseite, die dem Auslassventil (18) zugewandt ist, eine Ringausnehmung (44) aufweist, die in jeder Verfahrstellung des Ventilkolbens (20) permanent fluidführend mit der Fluidzufuhr (40) verbunden ist.

6. Pumpenvorrichtung nach einem der vorstehenden Ansprüche, **dadurch gekennzeichnet, dass** der Ventilkolben (20) eine weitere Ringausnehmung (48) aufweist, in die in jeder Verfahrstellung des Ventilkolbens (20) der Durchlass (42) im Pumpengehäuse (10) ausmündet und dass die beiden Ringkammern (44, 48) des Ventilkolbens (20) durch den innenliegenden Vorsprung (36) mit der Druckmeldefläche (26) räumlich voneinander getrennt sind.

7. Pumpenvorrichtung nach einem der vorstehenden Ansprüche, **dadurch gekennzeichnet, dass** der Ventilkolben (20) an seiner Außenumfangsfläche eine Angriffsfläche (54) für den Energiespeicher in Form einer Druckfeder (28) aufweist, die sich mit ihrem anderen freien Ende am Pumpengehäuse (10) abstützt.

8. Pumpenvorrichtung nach einem der vorstehenden Ansprüche, **gekennzeichnet dadurch, dass** der Pumpenkolben (12) im unbetätigten Zustand mittels eines weiteren Energiespeichers, vorzugsweise in Form einer weiteren Druckfeder (56), in einer rückwärtigen Ausgangsstellung ist, bei der der Pumpenraum (30) sein größtes Pumpenvolumen einnimmt und dass im betätigten Zustand der Pumpenkolben (12) im Rahmen des Förderhubes in einer vorwärtigen Bewegung dieses Pumpenvolumen über die Austrittstelle (24) und das Auslassventil (18) ausbringt.

9. Pumpenvorrichtung nach einem der vorstehenden Ansprüche, **dadurch gekennzeichnet, dass** der Fluidweg in Richtung des Auslassventiles (18) quer zum Fluidweg über den Durchlass (42) im Pumpengehäuse (10) verläuft.

10. Pumpenvorrichtung nach einem der vorstehenden Ansprüche, **dadurch gekennzeichnet, dass** die Betätigungsmagneteinrichtung (14) einen über eine bestrombare Spule (72) betätigbaren Magnetanker (74) verfügt, der über ein Stangenteil (84) auf den Pumpenkolben (12) einwirkt.

## Claims

1. Pump device comprising a pump piston (12) which is longitudinally movable in a pump housing (10) and which, controlled by an actuating solenoid device (14), acts on a inlet valve (16) and an outlet valve (18), wherein the inlet valve (16) opens during the intake stroke of the pump piston (12), and the outlet valve (18) opens during the delivery stroke thereof, **characterised in that** the inlet valve (16) has an annular valve piston (20) which encompasses the pump housing (10) which has an entry point (22) and an exit point (24) for fluid, **in that** the valve piston (20) has a pressure-sensing surface (26) which is controlled by the pump piston (12) in such a manner that, during the intake stroke, the pressure-sensing surface (26) of the valve piston (20) is moved, counter to the action of an energy accumulator (28), in the movement direction of the pump piston (12) and in the process vacates a fluid path into a pump chamber (30) of the pump housing (10) by means of the pump piston (12) and **in that**, during the delivery stroke, the valve piston (20) of the inlet valve (16), under the action of the energy accumulator (28) and the pressure-sensing surface (26), blocks this fluid path and opens the outlet valve (18).

2. Pump device according to claim 1, **characterised in that** the valve piston (20) of the inlet valve (16) is guided along a guide surface (34) on the outer circumferential surface of the pump housing (10) and **in that** the valve piston (20) has a protrusion (36) on its inner side directed towards the pump housing (10), which protrusion forms the pressure-sensing surface (26) that extends transverse to the longitudinal axis (37) of the pump piston (12).

3. Pump device according to claim 1 or 2, **characterised in that** the protrusion (36) of the valve piston (20) is guided along a corresponding recess (38) in the pump housing (10) and **in that**, in the unactuated state of the valve piston (20), the fluid path between the pump chamber (20) and a fluid supply (40) is blocked.

4. Pump device according to one of the preceding claims, **characterised in that**, in the unactuated state, the protrusion (36) of the valve piston (20) with its axial overall length at least partially covers a passage (42), preferably in the form of a row of holes, in the pump housing (10) as the entry point (22) and part of the fluid path and, in the actuated state, at least partially passes over this passage (42) and unblocks the fluid path to the fluid supply (40).

5. Pump device according to one of the preceding claims, **characterised in that** the valve piston (20) has on its free end face, which is directed towards the outlet valve (18), an annular recess (44) which is permanently connected to the fluid supply (40) in a fluidconducting manner in each travel position of the valve piston (20).

6. Pump device according to one of the preceding claims, **characterised in that** the valve piston (20) has a further annular recess (48) into which the passage (42) in the pump housing (10) opens in each travel position of the valve piston (20), and **in that** the two annular recesses (44, 48) of the valve piston (20) are spatially separated from each other by the internal protrusion (36) with the pressure-sensing surface (26).

7. Pump device according to one of the preceding claims, **characterised in that** the valve piston (20) has, on its outer circumferential surface, an engagement surface (54) for the energy accumulator in the form of a compression spring (28) which is supported with its other free end on the pump housing (10).

8. Pump device according to one of the preceding claims, **characterised in that** the pump piston (12) in the unactuated state is in a rearward starting position by means of a further energy accumulator, preferably in the form of a further compression spring (56), in which rearward starting position the pump chamber (30) takes up its largest pump volume, and **in that**, in the actuated state, the pump piston (12) in the course of the delivery stroke delivers this pump volume in a forwards movement via the exit point (24) and the outlet valve (18).

9. Pump device according to one of the preceding claims, **characterised in that** the fluid path towards the outlet valve (18) extends transverse to the fluid path via the passage (42) in the pump housing (10).

10. Pump device according to one of the preceding claims, **characterised in that** the actuating solenoid device (14) has a solenoid armature (74) which can be actuated via an energisable coil (72) that acts on the pump piston (12) via a rod part (84).

## Revendications

1. Installation de pompage comprenant un piston (12) de pompe, qui est monté avec possibilité de se déplacer longitudinalement dans un corps (10) de pompe et qui, commandé par un dispositif (14) magnétique d'actionnement, agît sur une soupape (16) d'entrée et une soupape (18) de sortie, dans laquelle la soupape (16) d'entrée s'ouvre lors de la course d'aspiration du piston (12) de la pompe et la soupape (18) de sortie lors de sa course de refoulement, **caractérisée en ce que** la soupape (16) d'entrée a un piston (20) de soupape annulaire, qui entoure le corps (10) de la pompe, lequel a un point (22) d'entrée et un point (24) de sortie pour du fluide, **en ce que** le piston (20) de la soupape a une surface (26) d'indication de la pression, qui est commandée par le piston (12) de la pompe, de manière à ce que, lors de la course d'aspiration, la surface (26) d'indication de la pression du piston (20) de la soupape se déplace, à l'encontre de l'action d'un accumulateur (28) d'énergie, dans le sens de déplacement du piston (12) de la pompe et dégage ainsi, par le piston (12) de la pompe, un chemin pour du fluide dans un espace (30) de pompage du corps (10) de la pompe, et **en ce que**, lors de la course de refoulement, le piston (20) de la soupape (16) d'entrée barre ce chemin de fluide sous l'action de l'accumulateur (28) d'énergie et de la surface (26) d'indication de la pression et commande à l'ouverture la soupape (18) de sortie.

2. Installation de pompage suivant la revendication 1, **caractérisée en ce que** le piston (20) de la soupape (16) d'entrée est guidé le long d'une surface (34) de guidage sur la surface périphérique extérieure du corps (10) de la pompe et **en ce que** le piston (20) de la soupape a, de son côté extérieur tourné vers le corps (10) de la pompe, une saillie (36), qui forme la surface (26) d'indication de la pression, qui s'étend transversalement à l'axe (37) longitudinal du piston (12) de la pompe.

3. Installation de pompage suivant la revendication 1 ou 2, **caractérisée en ce que** la saillie (36) du piston (20) de la soupape est guidée le long d'un ressaut (38) correspondant du corps (10) de la pompe, et **en ce que**, dans l'état non actionné du piston (20) de la soupape, le chemin pour du fluide entre l'espace (20) de pompage et une amenée (40) de fluide est barré.

4. Installation de pompage suivant l'une des revendications précédentes, **caractérisée en ce que** la saillie (36) du piston (20) de la soupape recouvre au moins en partie, par sa longueur de construction axiale, dans l'état non actionné, un passage (42), de préférence sous la forme d'une rangée de trous dans le corps (10) de la pompe comme point (22) d'entrée et partie du chemin pour du fluide et, dans l'état actionné, dépasse au moins en partie ce passage (42) et dégage le trajet pour du fluide vers l'amenée (40) de fluide.

5. Installation de pompage suivant l'une des revendications précédentes, **caractérisée en ce que** le piston (20) de la soupape a, sur son côté frontal libre, qui est tourné vers la soupape (18) de sortie, un évidement (44) annulaire qui, en toute position de déplacement du piston (20) de la soupape, communique fluidiquement de manière permanente avec l'amenée (40) de fluide.

6. Installation de pompage suivant l'une des revendications précédentes, **caractérisée en ce que** le piston (20) de la soupape a un autre évidement (48) annulaire, dans lequel débouche, dans chaque position de déplacement du piston (20) de la soupape, le passage (42) dans le corps (10) de la pompe, et **en ce que** les deux évidements (44, 48) annulaires du piston (20) de la soupape sont séparés l'un de l'autre dans l'espace par la saillie (36) se trouvant à l'intérieur et ayant la surface (26) d'indication de la pression.

7. Installation de pompage suivant l'une des revendications précédentes, **caractérisée en ce que** le piston (20) de la soupape a, sur sa surface périphérique extérieure, une surface (54) d'attaque de l'accumulateur d'énergie sous la forme d'un ressort (28) de compression, qui s'appuie, par son autre extrémité libre, sur le corps (10) de la pompe.

8. Installation de pompage suivant l'une des revendications précédentes, **caractérisée en ce que** le piston (12) de la pompe est, dans l'état non actionné, au moyen d'un autre accumulateur d'énergie, de préférence sous la forme d'un autre ressort (56) de compression, dans une position de départ vers l'arrière, dans laquelle l'espace (30) de pompage prend son volume de pompage le plus grand, et **en ce que**, dans l'état actionné, le piston (12) de la pompe, dans le cadre de la course de refoulement, dans un mouvement vers l'avant, fait sortir ce volume de pompage en passant par le point (24) de sortie et la soupape (18) de sortie.

9. Installation de pompage suivant l'une des revendications précédentes, **caractérisée en ce que** le chemin pour du fluide, dans la direction de la soupape (18) de sortie, s'étend transversalement au chemin pour du fluide en passant par le passage (42) dans le corps (10) de la pompe.

10. Installation de pompage suivant l'une des revendications précédentes, **caractérisée en ce que** le dispositif (14) magnétique d'actionnement dispose d'une armature (74) magnétique, qui peut être actionnée par une bobine (72) pouvant être alimentée en courant et qui agît sur le piston (12) de la pompe, par l'intermédiaire d'une partie (84) en forme de barre.
